# NEW EUROPEAN PATENT SPECIFICATION

(11) **EP 2 893 995 B2**
(45) Date of publication and mention of the opposition decision: **02.12.2026**
(45) Mention of the grant of the patent: 27.03.2019
(21) Application number: 14150475.3
(22) Date of filing: 08.01.2014
(51) Int. Cl.: B23C 5/20, B23C 5/06

(54) **A metal cutting insert and a milling tool**
Schneideinsatz und Fräswerkzeug
Insert de découpe métallique et outil de fraisage

(43) Date of publication of application: 15.07.2015
(73) Proprietor: Sandvik Intellectual Property AB, 811 81 Sandviken (SE)
(72) Inventor: Roman, Stefan, SE-818 32 Valbo (SE); Viklund, Per, SE-803 11 GÄVLE (SE)
(74) Representative: WSL Patentanwälte Partnerschaft mbB

(56) References cited:
- EP-A1- 2 022 584
- WO-A1-2013/180160
- WO-A1-2013/180161
- US-A- 3 229 349
- US-A- 5 807 031
- US-A1- 2004 265 073
- US-A1- 2005 169 716
- US-A1- 2006 210 364
- US-A1- 2007 003 384
- US-A1- 2011 170 963
- US-A1- 2013 129 430
- US-A1- 2013 156 515
- US-B2- 7 232 279
- US-B2- 8 231 311
- US-B2- 8 491 234

## Description

### TECHNICAL FIELD OF THE INVENTION

The present invention relates to a cutting insert configured for chip-removing machining of a metallic workpiece by means of milling according to the preamble of claim 1. The present invention also relates to a milling tool according to the preamble of claim 13 comprising a tool body and at least one such cutting insert. Examples of a cutting insert according to the preamble of claim 1 and of a face milling tool according to the preamble of claim 13 are known from WO2013/180160 A1.

### BACKGROUND OF THE INVENTION AND PRIOR ART

Milling tools for chip-removing machining of metal workpieces are generally composed of a rotatable tool body and a plurality of replaceable cutting inserts made of cemented carbide, ceramics, or other hard material. Since the cutting inserts are subjected to significant wear upon use in a milling tool, it is desirable for the insert to have as many edges as possible in order to prolong the service life of the cutting insert. Cutting inserts are therefore often made double-sided with cutting edges formed along both an upper side and a lower side of the insert, thus doubling the number of cutting edges per insert.

A face milling tool configured for chip-removing machining and a double-sided cutting insert with seven main cutting edges per side are disclosed in EP2022584. The milling tool comprises a tool body including a front end and a rear end, between which a central rotation axis extends around which the tool is rotatable in a direction of rotation and with which an envelope surface is concentric. Several insert seats are formed in a transition between the front end and the envelope surface. Each insert seat comprises a bottom support surface and a side support comprising at least one side support surface. A chip pocket is provided in front of each insert seat in the direction of rotation of the tool. The tool further comprises several cutting inserts securely and detachably mounted in the insert seats.

The cutting insert disclosed in EP2022584 comprises an upper side defining an upper extension plane and a lower side defining a lower extension plane parallel to the upper extension plane, wherein a centre axis extends perpendicularly through the upper extension plane and the lower extension plane. A side surface connects the upper side and the lower side, the side surface comprising a plurality of main and secondary clearance surfaces. Seven identical and alternately usable upper cutting edges extend around the upper side, wherein each cutting edge comprises a chip removing main cutting edge portion and a secondary cutting edge portion, wherein the main cutting edge portion is formed in a transition between the upper side and one of said main clearance surfaces, and the secondary cutting edge portion is formed in a transition between the upper side and one of said secondary clearance surfaces in a region between two main cutting edge portions. The milling insert has a conventional negative geometry with the clearance surfaces formed at right angles with respect to the upper and lower extension planes of the insert. The cutting insert is mounted in the tool body of the milling tool such that the main cutting edge is at a corner angle of 40°-44° with respect to the axis of rotation of the milling tool. In other words, the entering angle κ between the main cutting edge and the direction of feed of the milling tool is 46°-50°. The cutting insert further has curved cutting edges, which serve to ensure a positive effective angle of inclination of the main cutting edge also for negative axial and moderately negative radial tipping-in angles (rake angles). This improves the chip formation properties of the tool for moderate cutting depths. However, the effective angle of inclination is, even with the curved cutting edges, only moderately positive. Drawbacks associated with small effective angles of inclinations, such as cutting characteristics with regards not only to the chip formation and control but also to the toughness behaviour of the cutting edges and the noise level of the tool, are therefore present with a cutting insert and a milling tool disclosed in EP2022584.

### SUMMARY OF THE INVENTION

It is an object of the present invention to overcome the problems discussed above and to provide a cutting insert and a milling tool with which it is possible to achieve an improved toughness behaviour of the cutting edges, an improved chip formation and control and a smoother machining resulting in lower noise levels.

This object is, according to a first aspect of the invention, achieved by the cutting insert initially defined, which is characterised by the features of claim 1. In other words, the upper main clearance surface is inclined outwards. With this configuration, the angle of inclination of the main cutting edge may be set to strongly positive in a milling tool configured such that the axial tipping-in angle, or axial rake angle, is neutral or negative, the radial tipping-in angle, or radial rake angle, is strongly negative, and the entering angle is acute. With a strongly positive angle of inclination of the main cutting edge, the milling tool operates more smoothly since the main cutting edge portion gradually enters the workpiece, giving lower noise levels and an improved toughness behaviour of the cutting edges. Furthermore, the chip formation is excellent, giving spiral chips which are easily evacuated. Thanks to the possibility of having a large angle of inclination, the cutting insert according to the invention has cutting characteristics similar to a single-sided cutting insert with positive geometry and thereby with a large angle of inclination. Similar to such an insert, it is suitable for milling in stainless steel, such as duplex stainless steel.

However, the negative geometry of the cutting insert according to the invention enables more cutting edges per cutting insert and therefore also a better tool economy than with a single-sided positive cutting insert.

According to invention, the inner angle α between the upper extension plane and each of said upper main clearance surfaces is well within the range 93° ≤ α ≤ 118°. An angle smaller than 93° may result in a too large clearance between on one hand the main clearance surface located rotationally behind the chip-removing main cutting edge portion and on the other hand the generally cone-shaped surface generated by the same. A too large clearance reduces the strength of the cutting insert. An angle larger than 118° may instead give an insufficient clearance. According to the invention, the inner angle α is within the range 98° ≤ α ≤ 114°, in which range the clearance is optimised.

According to one embodiment, the upper side comprises a recessed upper base surface extending in parallel with the upper extension plane, and an upper chip surface extending between the upper cutting edges and the upper base surface. With a recessed upper base surface it is possible to achieve a positive rake angle, resulting in improved chip formation, lower cutting forces and thus also reduced power consumption.

According to one embodiment, the upper side further comprises at least one upper reinforcement land connecting the upper cutting edges with the upper chip surface. The at least one reinforcement land increases the main cutting edge angle, which is the inner angle between the upper main clearance surface and the chip surface as seen in cross section, and thereby increases the strength of the cutting edge. The reinforcement land also acts so as to guide the chip away from the chip surface, reducing friction and thereby also heat generation. This embodiment is particularly advantageous for working at high loads. The width and the angle of the reinforcement land may be varied, but generally a wider reinforcement land enables working at higher loads. It is also possible to have more than one reinforcement lands, for example two reinforcement lands which are arranged in connection to each other and at a slightly different angle with respect to the upper extension plane.

According to claim 1, each of said secondary clearance surfaces is formed at an inner angle β with respect to the upper extension plane as seen in side elevation view, wherein β < α. By forming the upper secondary clearance surface, which is located rotationally behind the secondary edge portion, at a smaller angle with respect to the upper extension plane than the upper main clearance surface, it is for negative axial tipping-in angles possible to achieve a clearance which is essentially the same rotationally behind the main cutting edge portion and rotationally behind the secondary cutting edge portion.

In the embodiment according to claim 1, the inner angle β between the upper extension plane and the secondary clearance surface below at least a part of the upper secondary cutting edge is within the range 85° ≤ β ≤ 100°. Within this range, the clearance behind the secondary edge portion is optimised for neutral (0°) to slightly negative axial tipping-in angles.

According to one embodiment, the cutting insert comprises at least seven identical and alternately usable upper cutting edges. The large number of cutting edges prolongs the service life of the cutting insert in comparison with a cutting insert with a smaller number of edges.

According to claim 1, the cutting insert is double-sided with the lower side identical to the upper side. This doubles the number of usable cutting edges and thus also doubles the service life in comparison with a single-sided cutting insert.

According to one embodiment, the side surface comprises a plurality of recessed support surfaces. By making the support surfaces recessed, their length may be increased so that the total support surface area is increased. The recessed support surfaces, which may be rounded or planar, thereby serve to improve the localisation of the cutting insert in an insert seat of a tool body when the cutting insert forms part of a milling tool, and to prevent rotation of the cutting insert within the insert seat.

According to one embodiment, the main cutting edge portion is rectilinear or essentially rectilinear. Such a cutting insert generally gives better chip formation along the entire length of the main cutting edge portion than a cutting insert with a curved main cutting edge portion. Thereby, the same cutting insert can, without chip formation problems, be used for different cutting depths.

According to one embodiment, the secondary cutting edge portion is in the form of a curved edge portion extending between two adjacent main cutting edge portions and having at least one radius of curvature. Such a cutting insert is useful for example for large cutting depths since the main cutting edge portion is relatively long compared to a cutting insert with surface-wiping secondary edges. It also has strong corner regions and may functionally give reduced cutting forces in comparison with cutting inserts with surface-wiping secondary edges. A larger radius of curvature of the curved edge portion gives a stronger corner region. In the case when the cutting insert has curved edge portions, the transitions between the secondary clearance surfaces and the main clearance surfaces is normally gradual, such that there is no sharp edge marking the transition. In this case, it is to be understood that the secondary clearance surface is the surface portion rotationally behind the secondary cutting edge portion, and the main clearance surface is the surface portion rotationally behind the main cutting edge portion.

According to one embodiment, the secondary cutting edge portion is in the form of at least one facetted edge portion formed between two adjacent main cutting edge portions. Such a facetted edge portion could for example serve as a corner generating edge portion.

According to claim 6, the at least one secondary cutting edge portion is in the form of a surface-wiping secondary edge. A cutting insert according to this embodiment may be used to generate planar surfaces and is preferably used for finishing operations. The angle that the surface-wiping secondary edge makes with the main cutting edge portion may be adapted for different entering angles of the milling tool.

In the embodiment according to claim 6, each upper cutting edge comprises a first and a second surface-wiping secondary edge formed at an angle with respect to each other as seen in plan view. In this embodiment, it is possible to use the same cutting insert in surface finishing operations with milling tools having different entering angles. It is also possible to form the secondary edges such that when the first secondary edge is used as a surface-wiping secondary edge, the second secondary edge functions as a corner generating edge. This may be advantageous for example when working cast iron in order to reduce the risk of edge frittering.

According to a second aspect of the invention, the above mentioned object is achieved by the face milling tool initially defined, which is characterised in that the tool comprises at least one cutting insert according to the invention securely and detachably mounted in the at least one insert seat.

According to an embodiment of this second aspect of the invention, the tool is configured so that a main cutting edge portion is at an entering angle κ smaller than 80°, and so that the upper extension plane of the cutting insert is on one hand radially tipped in at a radial tipping-in angle γ_{f} within the range - 60° ≤ γ_{f} ≤ -25° and on the other hand axially tipped in at an axial tipping-in angle γₘ within the range -20° ≤ γₘ ≤ 0°. By means of such a tool, it is possible to achieve a strongly positive inclination angle of the main cutting edge portion, thus achieving the above mentioned advantages.

### BRIEF DESCRIPTION OF THE DRAWINGS

- Fig. 1: shows a perspective view of a cutting insert according to a first embodiment of the invention;
- Fig. 2: shows a side view of the cutting insert in fig. 1;
- Fig. 3: shows a partial top view of the cutting insert in fig. 1;
- Fig 4a-c: show partial cross sections along lines IVa, IVb, and IVc in fig. 3, respectively,
- Fig. 5: shows a perspective view of a cutting insert according to a second embodiment of the invention;
- Fig. 6: shows a side view of the cutting insert in fig. 5;
- Fig. 7: shows a perspective view of a cutting insert according to a third embodiment of the invention;
- Fig. 8: shows a partial top view of the cutting insert in fig. 7;
- Fig. 9a-c: show partial side views and a cross section from the lines IXa-IXa, IXb-IXb and along the line IXc-IXc in fig. 8, respectively,
- Fig. 10: shows a perspective view of a cutting insert according to a fourth embodiment of the invention;
- Fig. 11: shows a perspective view of a cutting insert according to a fifth embodiment of the invention;
- Fig. 12: shows a top view of the cutting insert in fig. 11;
- Fig. 13: shows a cross section along the line in fig. 12;
- Fig. 14: shows a perspective view of a cutting insert according to a sixth embodiment of the invention;
- Fig. 15: shows a perspective view of a milling tool according to the invention;
- Fig. 16: shows a side view of the milling tool in fig. 15;
- Fig. 17: shows the axial tipping-in angle in a partial side view of the milling tool in fig. 15;
- Fig. 18: shows the radial tipping-in angle in a partial planar view of the milling tool in fig. 15;
- Fig. 19: shows the entering angle in a partial side view of the milling tool in fig. 15; and
- Fig. 20: shows the angle of inclination in a partial perspective view of the milling tool in fig. 15.

### DETAILED DESCRIPTION OF EMBODIMENTS OF THE INVENTION

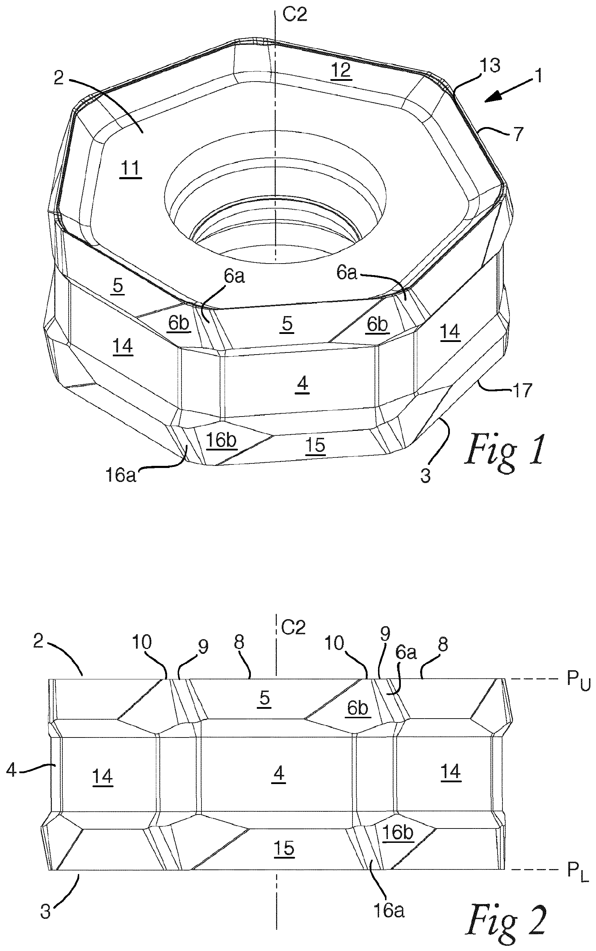

The cutting insert according to a first embodiment of the invention is shown in fig. 1-4. The cutting insert 1 is double-sided with a polygonal basic shape and comprises an upper side 2 defining an upper extension plane P_{U} and an identical lower side 3 defining a lower extension plane P_{L}, which is parallel to the upper extension plane P_{U}. A centre axis C2 extends perpendicularly through the upper extension plane P_{U} and the lower extension plane P_{L}. The upper side 2 and the lower side 3 are connected by a side surface 4, which comprises several main clearance surfaces 5, 15 and secondary clearance surfaces 6a, 6b, 16a, 16b. Around the upper side 2, seven identical and alternately usable cutting edges 7 extend. Each cutting edge comprises an essentially rectilinear chip removing main cutting edge portion 8 and a first and a second secondary cutting edge portion 9, 10, formed as surface-wiping edges. The main cutting edge portion 8 is formed in a transition between the upper side 2 and one of the upper main clearance surfaces 5. The first secondary cutting edge portion 9 is formed in a transition between the upper side 2 and a first upper secondary clearance surface 6a in a region between two main cutting edge portions 8, that is, in a corner region of the cutting insert 1. The second secondary cutting edge portion 10 is formed in a transition between the upper side 2 and a second upper secondary clearance surface 6b. The first secondary cutting edge portion 9 is here configured to act as a surface-wiping secondary edge when the cutting insert 1 is mounted in a milling tool with an entering angle κ of approximately 25°. If instead the cutting insert 1 is mounted in a milling tool with an entering angle κ of approximately 42°, the first secondary cutting edge portion 9 acts as a corner edge, while the second secondary cutting edge portion 10 at this entering angle is configured to act as a surface-wiping secondary edge. Thus, the milling insert 1 according to this embodiment can be used for two different entering angles. The edge portions between the main cutting edge portion 8, the first secondary cutting edge portion 9, the second secondary cutting edge portion 10 and the next main cutting edge portion 8 are formed as radial transitions.

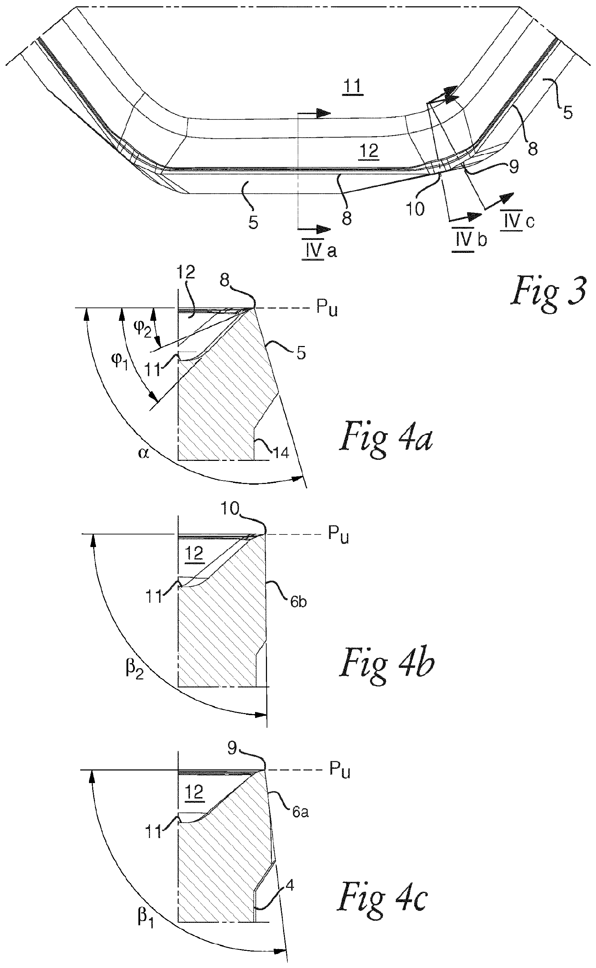

The cutting insert 1 further comprises a recessed upper base surface 11 extending in parallel with the upper extension plane P_{U}. An upper chip surface 12 extends in the region between the upper cutting edges 7 and the upper base surface 11. Furthermore, between the cutting edges 7 and the base surface 11, a reinforcement land 13 extends. The cutting insert 1 in this first embodiment also comprises, in its side surface 4, several recessed support surfaces 14 forming a "waist" around the cutting insert. As can be seen in fig. 4a and 4b, the radial distance measured from the centre axis C2 to the recessed support surface 14 below one of the main cutting edge portions 8 equals the radial distance from the centre axis C2 to the main cutting edge portion 8. However, in the corner region, the corresponding distance between the recessed support surface 14 and the centre axis C2 is smaller than the distance from the centre axis C2 to the secondary cutting edge portions 9, 10. Transition surfaces are formed between the recessed support surface 14 and the clearance surfaces 5, 6a, 6b.

As can be seen in fig. 2, the main clearance surface 5 is formed at an obtuse inner angle α with respect to the upper extension plane P_{U} as seen in side elevation view. In fig. 4a, a partial cross section taken across the main clearance surface shows the obtuse angle α. In this embodiment, the inner angle α is 107°. The secondary clearance surfaces 6a, 6b are formed at inner angles β₁, β₂ with respect to the upper extension plane P_{U} as seen in side elevation view. This is in fig. 4b shown in cross section for the upper second secondary clearance surface 6b, formed at an angle β₂=97°, and in fig. 4c shown in cross section for the upper first secondary clearance surface 6a, formed at an angle β₁=90.5°.

The cutting insert 1 is indexable to different index positions. In one index position, one of the upper cutting edges 7 is cutting, wherein the upper side 2 partially forms a rake surface and the lower side 3 forms a support surface resting on a bottom support surface of an insert seat of a milling tool. In another index position, one of a number of lower cutting edges 17 extending around the lower side 3 is cutting, wherein the lower side 3 partially forms a rake surface, and the upper side 2 forms a support surface resting on the bottom support surface of the insert seat.

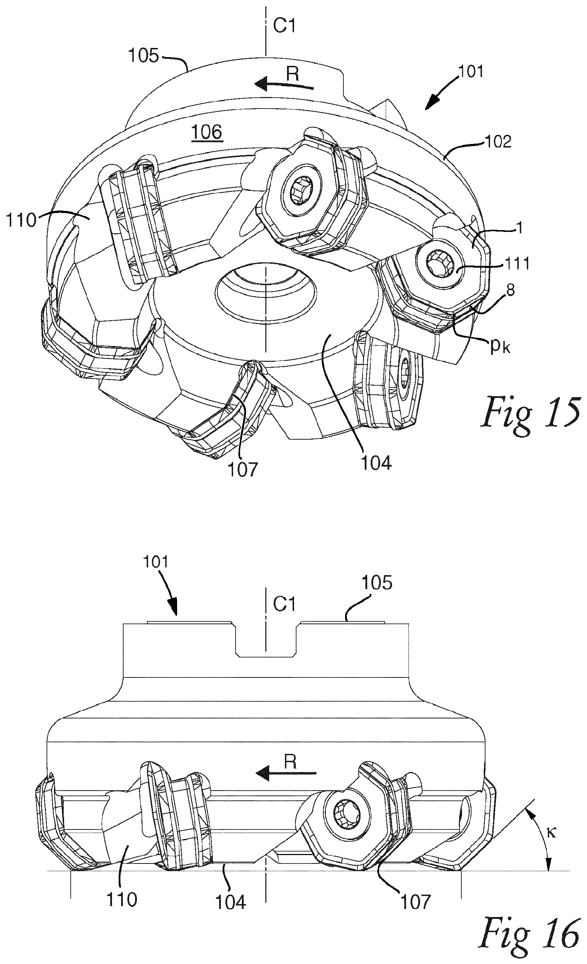

Fig. 15-18 show the cutting insert 1 according to a variety of the first embodiment of the invention mounted in a milling tool 101 according to the invention. The milling tool 101 comprises a tool body 102 and several cutting inserts 1. The tool body 102 includes a front end 104 and a rear end 105, between which a central rotation axis C1 extends. The tool is rotatable in a direction of rotation R around the central rotation axis C1 and an envelope surface 106 is concentric with the axis C1. Several insert seats 107 are formed in a transition between the front end 104 and the envelope surface 106. Each insert seat 107 comprises a bottom support surface against which the lower side 3 of the cutting insert 1 rests, a side support comprising two side support surfaces against which two of the recessed support surfaces 14 rest, and a chip pocket 110 provided in front of the insert seat 107 in the direction of rotation R of the tool. The cutting inserts 1 are securely and detachably mounted in the insert seats 107 by means of a screw 111.

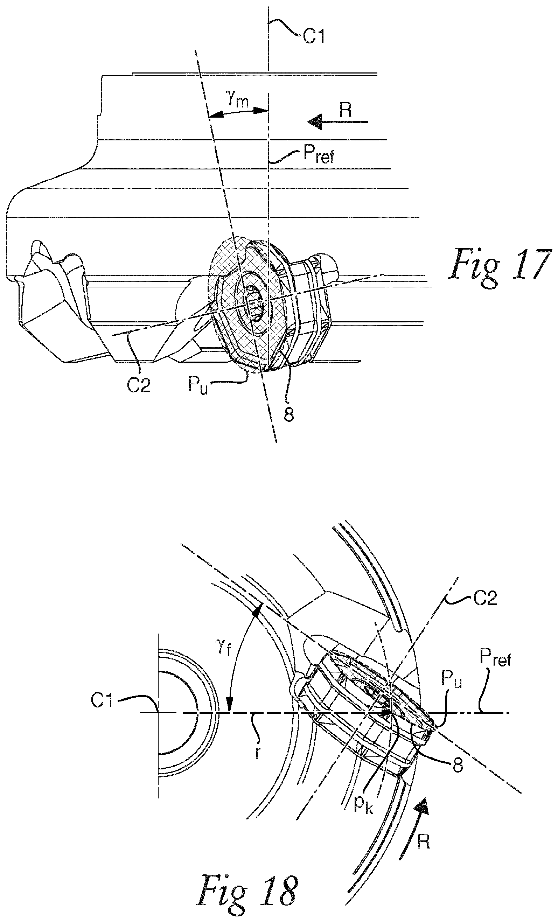

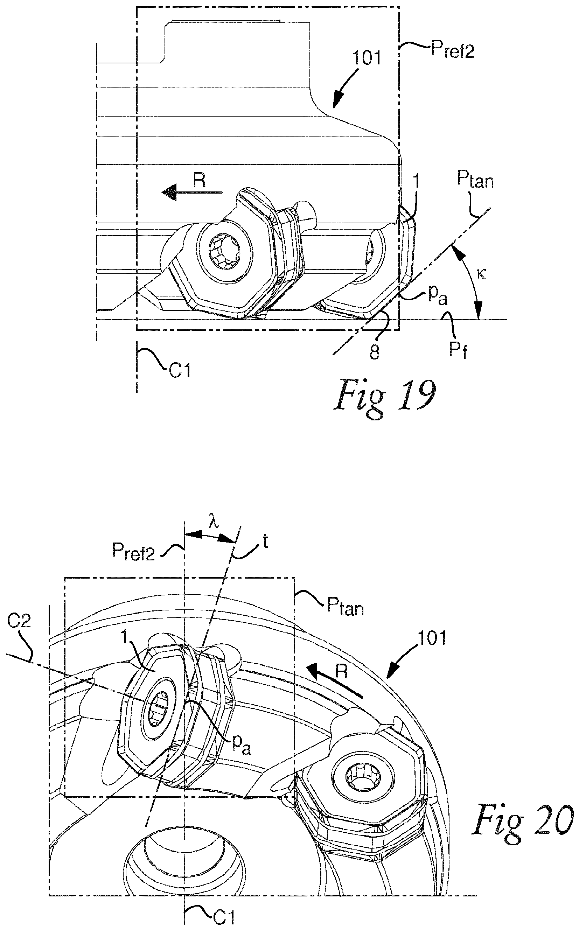

The tool shown in fig. 15-19 is configured such that the chip-removing main cutting edge portion 8 is at an entering angle κ of around 42°, so that the first secondary cutting edge portion 9 acts as a corner edge, while the second secondary cutting edge portion 10 acts as a surface-wiping secondary edge. The entering angle κ is the angle that the main cutting edge portion 8 makes with the direction of feed of the milling tool as seen in side elevation view, as shown in fig. 19. The entering angle κ is more specifically defined as the angle between a plane Pₜₐₙ and a plane P_{f} measured in a reference plane P_{ref2}, which planes Pₜₐₙ, P_{f} and P_{ref2} will be defined below. The entering angle varies along the edge, even though the edge is straight. The cutting insert 1 is tipped in so that the upper extension plane P_{U} is at a negative radial tipping-in angle γ_{f} of -35°. The radial tipping-in angle γ_{f}, shown in fig. 18, is the angle between the upper extension plane P_{U} and a line along the radial vector r of the tool as seen in planar view. More specifically, the radial tipping-in angle γ_{f} is obtained by taking a plane P_{f} normal to the central rotation axis C1 and passing through a point pₖ, and in the plane P_{f} measure the angle between a reference plane P_{ref} and the upper extension plane P_{U} as shown in fig. 18, which is a view in the plane P_{f}. The reference plane P_{ref} is a plane spanned by the central rotation axis C1 and a radial vector r perpendicular to the central rotation axis C1 and passing through the point pₖ. The radius r of the tool is measured between the central rotation axis C1 and the point pₖ, which for this cutting insert 1 is located in the transition between the main cutting edge portion 8 and the adjacent second secondary cutting edge portion 10, in this embodiment a surface-wiping secondary edge. With a negative radial tipping-in angle γ_{f}, the upper extension plane P_{U} is directed outwards with regard to the central rotation axis C1 of the tool. The cutting insert 1 is further tipped in so that the upper extension plane P_{U} is at a negative axial tipping-in angle γₘ of -10°. The axial tipping-in angle γₘ, shown in fig. 17, is the angle between the upper extension plane P_{U} and the central rotation axis C1 of the tool. More specifically, the axial tipping-in angle γₘ is obtained by measuring the angle between the upper extension plane P_{U} and the reference plane P_{ref} in a plane Pₘ (not shown), which plane Pₘ is perpendicular to the upper extension plane P_{U}, parallel to the central rotation axis C1 and passes through the point pₖ. With a negative axial tipping-in angle γₘ, the upper extension plane P_{U} is inclined towards the front end 104 of the milling tool. With an entering angle κ of approximately 42°, a radial tipping-in angle γ_{f} of -35° and an axial tipping-in angle γₘ of -10°, the main cutting edge portion 8 is at an angle of inclination λ of approximately 20°. The angle of inclination λ, shown in fig. 20, is the angle that the main cutting edge portion 8 in a point pₐ, or a tangent t to the main cutting edge portion 8 in that point, makes with a second reference plane P_{ref2}. The second reference plane P_{ref2} is parallel with and includes the central rotation axis C1 and includes the point pₐ on the main cutting edge portion 8. The angle of inclination λ is measured in a tangential plane Pₜₐₙ. The tangential plane Pₜₐₙ is tangential to the main cutting edge portion 8 in the point pₐ and is perpendicular to the second reference plane P_{ref2}. In fig. 20, the angle of inclination λ is shown by looking at the main cutting edge portion 8 from below the front end 104 of the tool 101, along a line which is normal to the tangential plane Pₜₐₙ. For the cutting insert 1 according to the first embodiment, the angle of inclination λ is approximately constant along the main cutting edge portion 8, since the main cutting edge portion 8 is essentially rectilinear. For a curved main cutting edge portion, the angle of inclination will vary along the edge.

With the cutting insert 1 according to the first embodiment mounted in the milling tool 101 as described above, the clearance behind the main cutting edge portion 8 in the direction of rotation R of the tool is optimised with regards to the obtuse inner angle α so that the cutting insert 1 has high strength, while still providing sufficient clearance. The clearance behind the surface-wiping secondary cutting edge 10 is sufficient thanks to the negative axial tipping-in angle γₘ. With the chosen values for the inner angles α, β₁ and β₂, the clearance behind the main cutting edge portion 8 and the secondary cutting edges 9, 10 is in a suitable range. The recessed upper base surface 11 ensures that a positive rake angle is achieved despite the large negative radial tipping-in angle γ_{f}. For this purpose, the base surface 11 is in this embodiment formed at a distance of 1.2 mm from the main cutting edge portion 8. The chip surface 12 is at the main portion of the main cutting edge 8 inclined at an angle φ₁ between 40° and 55°, here approximately 44°, with respect to the upper extension plane P_{U}. The reinforcement land 13 is at an angle φ₂ between 25° and 45°, as shown in fig. 4a. The recessed support surfaces 14 formed in the side surface 4 of the cutting insert 1 provide a large support area resting on the side support surfaces of the milling tool 101. This prevents rotation of the cutting insert 1 within the insert seat 107 of the milling tool 101.

The milling tool in which the cutting insert 1 according to the first embodiment is mounted may instead be configured for an entering angle κ of approximately 25°, in which case the first secondary cutting edge portion 9 acts as a surface-wiping secondary edge. The second secondary cutting edge portion 10 is for moderate cutting depths not active as a cutting edge. However, the second secondary cutting edge portion 10 adjacent the active main cutting edge portion 8 may be used as a prolongation of the main cutting edge portion 8 if the cutting depth is large. For an entering angle κ of approximately 25°, the axial tipping-in angle γₘ may be set to -17° and the radial tipping-in angle γ_{f} to -45°, in which case the angle of inclination λ is approximately 33°. It is preferable to adjust the radial and the axial tipping-in angles so that the angle of inclination λ is within the range 15° ≤ λ ≤ 50°.

Further embodiments of the cutting insert 1 will now be described. It is to be noted that the same reference sign designates the same or a similar element in all embodiments disclosed.

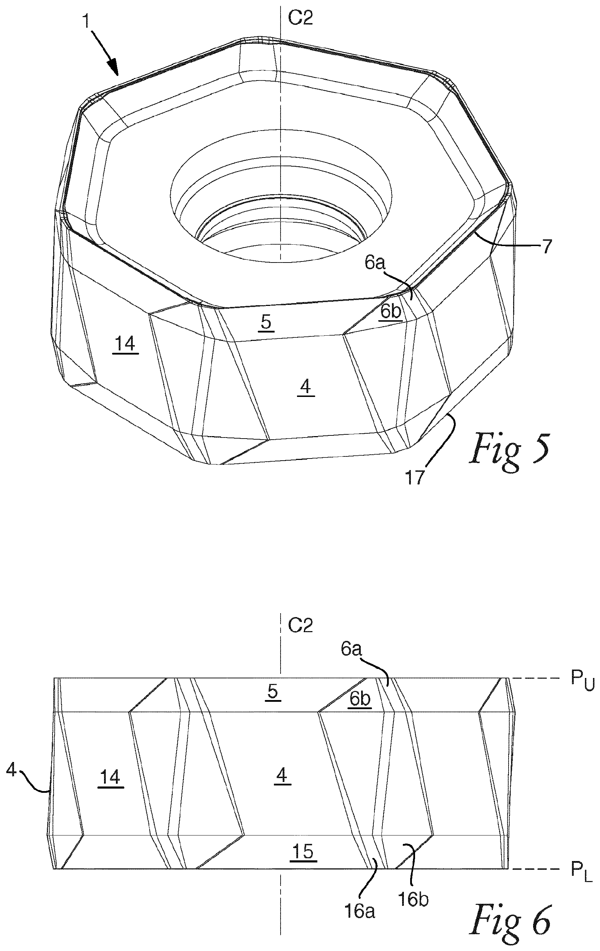

A second embodiment of the cutting insert according to the invention is shown in fig. 5-6. The cutting insert 1 according to this embodiment only differs from the cutting insert of the first embodiment in that it lacks recessed support surfaces. Instead, the side surface 4 extends without recesses from the upper cutting edges 7 to the lower cutting edges 17, including upper clearance surfaces 5, 6a, 6b and lower clearance surfaces 15, 16a, 16b. The side surface 4 also includes non-recessed support surfaces 14 extending between the main clearance surfaces 5, 15.

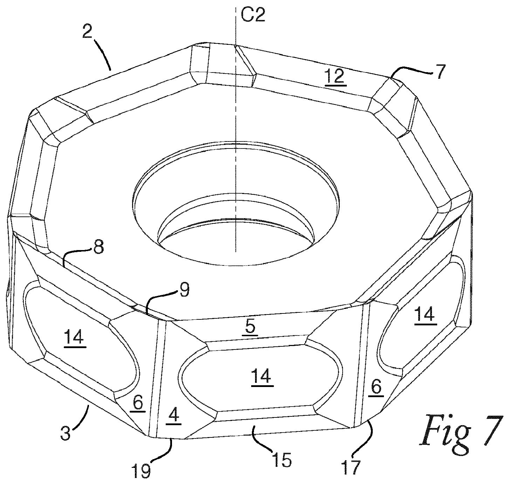

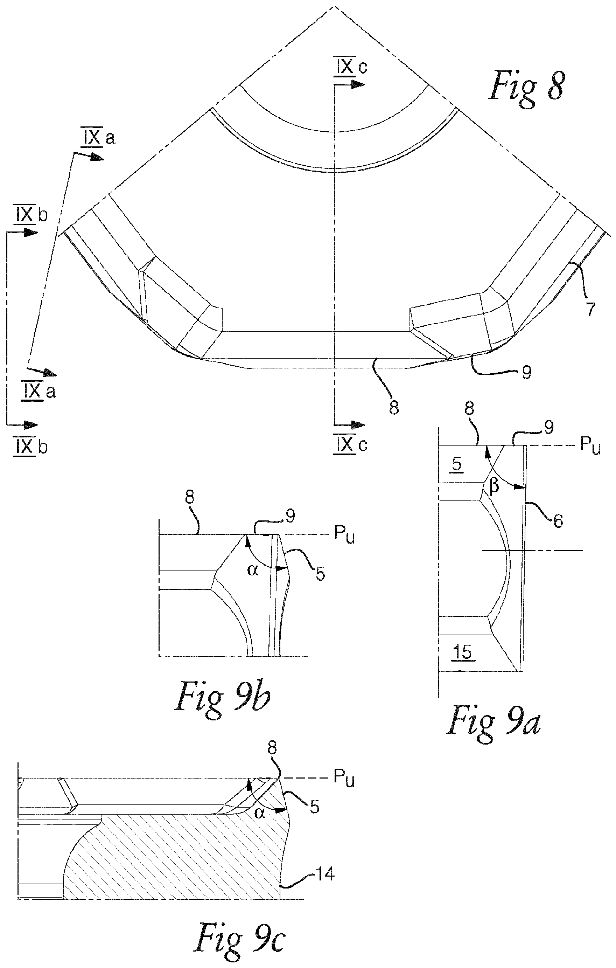

A third embodiment of the cutting insert according to the invention is shown in fig. 7-9. The cutting insert 1 according to this embodiment is also double-sided and indexable and differs from the cutting insert according to the first embodiment in that it comprises upper cutting edges 7, each including a main cutting edge portion 8 and one secondary cutting edge portion 9 in the form of a surface-wiping secondary edge. Between the secondary cutting edge portion 9 and the subsequent main cutting edge portion 8 is a radial transition. Since the cutting insert 1 is double-sided, the lower side 3 is identical to the upper side 2, with lower cutting edges 17 extending around the lower side 3. The cutting insert 1 according to this embodiment further differs from the first embodiment in that it lacks reinforcement land. Instead, the upper side 2 is formed with a chip surface 12 extending between the upper cutting edges 7 and a recessed upper base surface 11. The cutting insert 1 also differs in the design of the side surface 4. Here, the side surface 4 comprises upper and lower main clearance surfaces 5, 15 and a secondary clearance surface 6 that extends all the way between the upper secondary cutting edge portion 9 and a corresponding lower secondary cutting edge portion 19. The recessed support surfaces 14 are rounded and are only formed below the upper main cutting edge portions 8. As can be seen in fig. 9a-c, the upper main clearance surface is formed at an obtuse inner angle α of 107° with respect to the upper extension plane P_{U} while the secondary clearance surface 6 is formed at a nearly right inner angle β with respect to the upper extension plane P_{U}. With these angles, the cutting insert is optimised such that at slightly negative axial tipping-in angles and strongly negative radial tipping-in angles, the clearances behind the main cutting edge portion 8 and the secondary cutting edge portion 9 are within a suitable range.

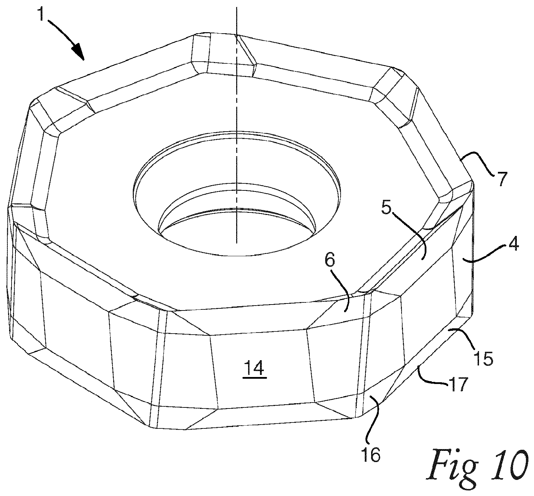

A fourth embodiment of the cutting insert according to the invention is shown in fig. 10. The cutting insert 1 according to this embodiment only differs from the cutting insert according to the third embodiment in that it lacks recessed support surfaces. Instead, the side surface 4 extends without recesses from the upper cutting edges 7 to the lower cutting edges 17, including upper main clearance surfaces 5, lower main clearance surfaces 15, non-recessed support surfaces 14 extending between the main clearance surfaces 5, 15, and upper and lower secondary clearance surfaces 6, 16.

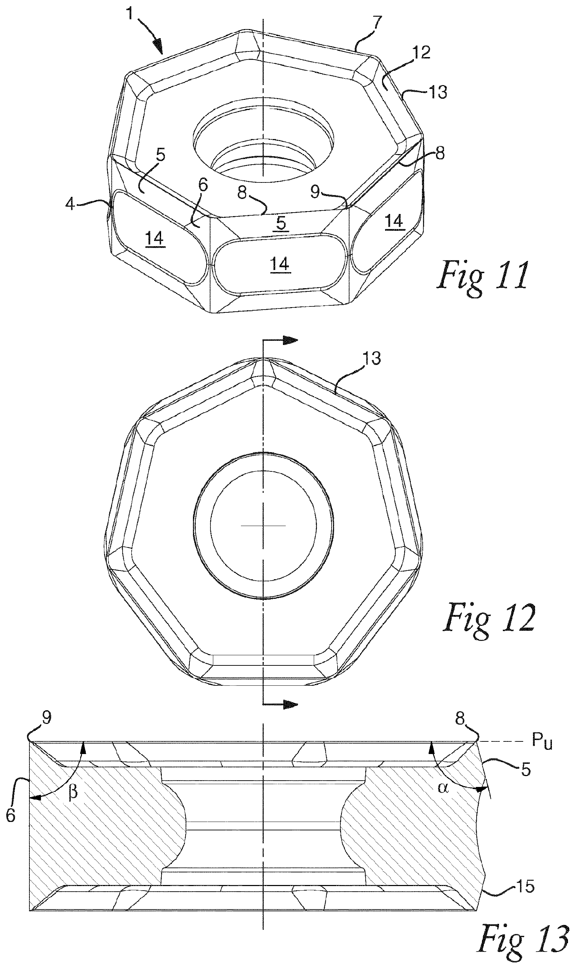

A fifth embodiment of the cutting insert according to the invention is shown in fig. 11-13. The cutting insert 1 according to this embodiment differs from the third embodiment in that instead of a surface-wiping secondary cutting edge, the secondary cutting edge portion 9 is formed as a curved cutting edge 9 with a corner radius defining the radius of curvature. The curved cutting edge portion 9 extends between two adjacent main cutting edge portions 8. The cutting insert further differs from the third embodiment in that it comprises a reinforcement land 13 extending between the upper cutting edges 7 and the upper chip surface 12. As in the third embodiment, the side surface 4 is formed with rounded recessed support surfaces 14 below the upper main clearance surfaces 5. The secondary clearance surface 6 is formed as a curved surface, with a gradual transition between the main clearance surface 5 and the secondary clearance surface 6. Since the cutting insert 1 according to the fifth embodiment is formed with curved cutting edges 9 with a corner radius, the cutting insert according to this embodiment has mirror symmetry with respect to the line shown in fig. 12, i.e. a bisector cutting the curved cutting edge 9 in two equal parts. As can be seen in fig. 13, the secondary clearance surface 6, below the bisector, is formed at a right angle β with respect to the upper extension plane P_{U}, while the main clearance surface 5 is formed at an obtuse inner angle α of around 107°. With a cutting insert 1 according to this embodiment mounted in a milling tool with a negative radial tipping-in angle γ_{f} of -35° and a negative axial tipping-in angle γₘ of -10°, the functional clearance behind both the main cutting edge portion 8 and behind the secondary cutting edge portion 9 is approximately 10°.

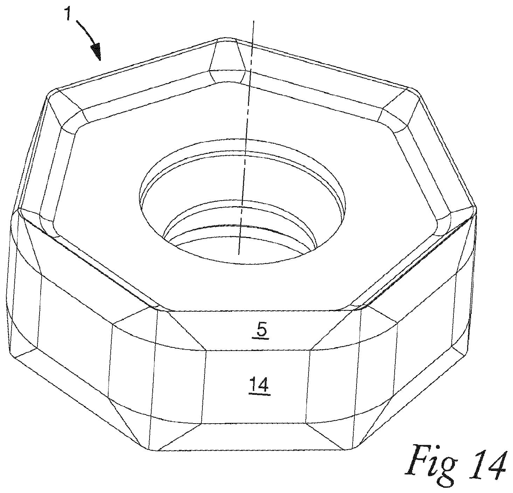

A sixth embodiment of the cutting insert according to the invention is shown in fig. 14. The cutting insert 1 according to this embodiment differs from the fifth embodiment only in that it lacks recessed support surfaces, but instead has non-recessed support surfaces 14 below the upper main clearance surfaces 5.

The invention is not limited to the embodiments disclosed but may be varied and modified within the scope of the following claims. For instance, the cutting edges may include curved main cutting edge portions, the cutting insert may be single-sided with cutting edges extending only around the upper side, a cutting insert with curved secondary cutting edge portion with a corner radius may be formed with planar recessed side support surfaces instead of rounded, the insert geometry could be with or without reinforcement land or lands, the reinforcement land and/or the chip surface may be curved surfaces, or the cutting insert may be formed with a larger number of cutting edges, such as eight cutting edges or more. The cutting insert may be designed for left hand rotation of the tool as well as for right hand rotation of the tool. The cutting insert may also, instead of being screw mounted, be secured by for example clamps.

### List of reference numbers

- 1: cutting insert
- 2: upper side
- 3: lower side
- 4: side surface
- 5: upper main clearance surface
- 6: secondary clearance surface
- 6a, 6b: upper secondary clearance surfaces
- 7: upper cutting edges
- 8: upper main cutting edge portion
- 9: upper secondary cutting edge portion
- 10: upper secondary cutting edge portion
- 11: base surface
- 12: chip surface
- 13: reinforcement land
- 14: support surfaces
- 15: lower main clearance surface
- 16: lower secondary clearance surface
- 16a, 16b: lower secondary clearance surfaces
- 17: lower cutting edges
- 19: lower secondary cutting edge portion
- 101: milling tool
- 102: tool body
- 104: front end
- 105: rear end
- 106: envelope surface
- 107: insert seat
- 110: chip pocket
- 111: screw
- P_{U}: upper extension plane
- P_{L}: lower extension plane
- P_{ref}: reference plane
- P_{ref2}: second reference plane
- Pₜₐₙ: tangential plane
- P_{f}: plane
- Pₘ: plane
- pₖ: point
- pₐ: point
- C1: central rotation axis of milling tool
- C2: centre axis of cutting insert
- r: radial vector
- t: tangent
- κ: entering angle
- λ: angle of inclination
- γ_{f}: radial tipping-in angle
- γₘ: axial tipping-in angle
- α: inner angle between P_{U} and main clearance surface
- β, β₁, β₂: inner angle between P_{U} and secondary clearance surface
- φ₁: angle between P_{U} and chip surface
- φ₂: angle between P_{U} and reinforcement land

## Claims

1. An indexable cutting insert (1) for a milling tool (101), the cutting insert comprising:
an upper side (2) defining an upper extension plane (PU );
a lower side (3) defining a lower extension plane (PL ) parallel to the upper extension plane (PU );
wherein a centre axis (C2) extends perpendicularly through the upper extension plane (PU ) and the lower extension plane (PL );
a side surface (4) connecting the upper side (2) and the lower side (3), the side surface (4) comprising a plurality of upper main clearance surfaces (5) and secondary clearance surfaces (6, 6a, 6b); and
at least six identical and alternately usable upper cutting edges (7) extending around the upper side (2), wherein each cutting edge (7) comprises a chip removing main cutting edge portion (8) and at least one secondary cutting edge portion (9, 10), wherein the main cutting edge portion (8) is formed in a transition between the upper side (2) and one of said upper main clearance surfaces (5), and the secondary cutting edge portion (9, 10) is formed in a transition between the upper side (2) and one of said secondary clearance surfaces (6, 6a, 6b) in a region between two main cutting edge portions (8), each of said upper main clearance surfaces (5) is formed at an obtuse inner angle α with respect to the upper extension plane (PU ) as seen in side elevation view, and the inner angle (α) between the upper extension plane (PU ) and each of said upper main clearance surfaces (5) is within the range 98° ≤ α ≤ 114° **characterized in that** the cutting insert (1) is double-sided with the lower side (3) identical to the upper side (2), that each of said secondary clearance surfaces (6, 6a, 6b) is formed at an inner angle β with respect to the upper extension plane (PU ) as seen in side elevation view, wherein β < α and **in that** the inner angle β between the upper extension plane (PU ) and the secondary clearance surface (6, 6a, 6b) below at least a part of the upper secondary cutting edge (9, 10) is within the range 85° ≤ β ≤ 100°.

2. The cutting insert according to claim 1, wherein the upper side (2) comprises a recessed upper base surface (11) extending in parallel with the upper extension plane (PU ), and an upper chip surface (12) extending between the upper cutting edges (7) and the upper base surface (11).

3. The cutting insert according to claim 2, wherein the upper side (2) further comprises at least one upper reinforcement land (13) connecting the upper cutting edges (7) with the upper chip surface (12).

4. The cutting insert according to any of claims 1-3, wherein the at least one secondary cutting edge portion (9, 10) is in the form of a surface-wiping secondary edge.

5. The cutting insert according to claim 4, wherein each upper cutting edge (7) comprises a first and a second surface-wiping secondary edge (9, 10) formed at an angle with respect to each other as seen in plan view.

6. An indexable cutting insert (1) for a milling tool (101), the cutting insert comprising:
an upper side (2) defining an upper extension plane (PU );
a lower side (3) defining a lower extension plane (PL ) parallel to the upper extension plane (PU );
wherein a centre axis (C2) extends perpendicularly through the upper extension plane (PU ) and the lower extension plane (PL );
a side surface (4) connecting the upper side (2) and the lower side (3), the side surface (4) comprising a plurality of upper main clearance surfaces (5) and secondary clearance surfaces (6, 6a, 6b); and
at least six identical and alternately usable upper cutting edges (7) extending around the upper side (2), wherein each cutting edge (7) comprises a chip removing main cutting edge portion (8) and at least one secondary cutting edge portion (9, 10), wherein the main cutting edge portion (8) is formed in a transition between the upper side (2) and one of said upper main clearance surfaces (5), and the secondary cutting edge portion (9, 10) is formed in a transition between the upper side (2) and one of said secondary clearance surfaces (6, 6a, 6b) in a region between two main cutting edge portions (8), each of said upper main clearance surfaces (5) is formed at an obtuse inner angle α with respect to the upper extension plane (PU ) as seen in side elevation view, wherein the inner angle (α) between the upper extension plane (PU ) and each of said upper main clearance surfaces (5) is within the range 98° ≤ α ≤ 114, **characterised in that** the at least one secondary cutting edge portion (9, 10) is in the form of a surface-wiping secondary edge and wherein each upper cutting edge (7) comprises a first and a second surface-wiping secondary edge (9, 10) formed at an angle with respect to each other as seen in plan view.

7. The cutting insert according to claim 6, wherein each of said secondary clearance surfaces (6, 6a, 6b) is formed at an inner angle β with respect to the upper extension plane (PU ) as seen in side elevation view, wherein β < α.

8. The cutting insert according to claim 7, wherein the inner angle β between the upper extension plane (PU ) and the secondary clearance surface (6, 6a, 6b) below at least a part of the upper secondary cutting edge (9, 10) is within the range 85° ≤ β ≤ 100°.

9. The cutting insert according to any of the preceding claims, wherein the cutting insert (1) comprises at least seven identical and alternately usable upper cutting edges (7).

10. The cutting insert according to any of the preceding claims, wherein the cutting insert (1) is double-sided with the lower side (3) identical to the upper side (2).

11. The cutting insert according to any of the preceding claims, wherein the side surface (4) comprises a plurality of recessed support surfaces (14).

12. The cutting insert according to any of the preceding claims, wherein the main cutting edge portion (8) is rectilinear or essentially rectilinear.

13. The cutting insert according to any of the preceding claims, wherein the secondary cutting edge portion (9) is in the form of a curved edge portion extending between two adjacent main cutting edge portions (8) and having at least one radius of curvature.

14. A face milling tool (101) configured for chip-removing machining comprising a tool body (102) including a front end (104) and a rear end (105), between which a central rotation axis (C1) extends around which the tool (101) is rotatable in a direction of rotation (R), and at least one insert seat (107) being formed in a transition between the front end (104) and an envelope surface (106) extending between the front end (104) and the rear end (105) of the tool body (102), the at least one insert seat (107) comprising a bottom support surface, wherein a chip pocket (110) is provided in front of the at least one insert seat (107) in the direction of rotation of the tool;
**characterized in**
**that** the tool (101) comprises at least one cutting insert (1) according to any of claims 1-13 securely and detachably mounted in the at least one insert seat (107).

15. The face milling tool (101) according to claim 14, wherein the tool is configured so that a main cutting edge portion (8) is at an entering angle K smaller than 80°, and so that the upper extension plane (PU ) of the cutting insert is on one hand radially tipped in at a radial tipping-in angle γf within the range -60° ≤ γf ≤ -25° and on the other hand axially tipped in at an axial tipping-in angle γm within the range -20° ≤ γm ≤ 0°.

## Patentansprüche

1. Indexierbarer Schneideinsatz (1) für ein Fräswerkzeug (101), wobei der Schneideinsatz aufweist:
eine obere Seite (2), welche eine obere Erstreckungsebene (P_{U}) definiert,
eine untere Seite (3), welche eine untere Erstreckungsebene (P_{L}) parallel zu der oberen Erstreckungsebene (P_{U}) definiert,
wobei eine zentrale Achse (C2) sich senkrecht durch die obere Erstreckungsebene (P_{U}) und die untere Erstreckungsebene (P_{L}) erstreckt,
eine Seitenfläche (4), welche die obere Seite (2) und die untere Seite (3) verbindet, wobei die Seitenfläche (4) eine Mehrzahl von oberen Hauptfreiflächen (5) und Nebenfreiflächen (6, 6a, 6b) aufweist, und
zumindest sechs identische und abwechselnd verwendbare obere Schneidkanten (7), die sich um die obere Seite (2) erstrecken, wobei jede Schneidkante (7) einen spanabhebenden Hauptschneidkantenabschnitt (8) und zumindest einen Nebenschneidkantenabschnitt (9, 10) aufweist, wobei der Hauptschneidkantenabschnitt (8) an einem Übergang zwischen der oberen Seite (2) und einer der oberen Hauptfreiflächen (5) gebildet wird und der Nebenschneidkantenabschnitt (9, 10) an einem Übergang zwischen der oberen Seite (2) und einer der Nebenfreiflächen (6, 6a, 6b) in einem Bereich zwischen zwei Hauptschneidkantenabschnitten (8) gebildet wird,
wobei jede der oberen Hauptfreiflächen (5) in einer Seitenansicht gesehen, unter einem stumpfen eingeschlossenen Winkel (α) bezüglich der oberen Erstreckungsebene (Pu) ausgebildet ist, und
der eingeschlossene Winkel (α) zwischen der oberen Erstreckungsebene (P_{U}) und jeder der Hauptfreiflächen (5) in dem Bereich von 98° ≤ α ≤ 114° liegt, **dadurch gekennzeichnet, dass** der Schneideinsatz (1) beidseitig ausgebildet ist, wobei die untere Seite (3) mit der oberen Seite (2) identisch ist, dass jede der genannten Nebenfreiflächen (6, 6a, 6b) in der Seitenansicht unter einem eingeschlossenen Winkel β zur oberen Erstreckungsebene (P_{U}) ausgebildet ist, wobei β < α gilt, und dass der eingeschlossene Winkel β zwischen der oberen Erstreckungsebene (P_{U}) und der Nebenfreifläche (6, 6a, 6b) unterhalb zumindest eines Teils der oberen Nebenschneidkante (9, 10) im Bereich von 85° ≤ β ≤ 100° liegt.

2. Schneideinsatz nach Anspruch 1, wobei die obere Seite (2) eine zurückspringende obere Basisfläche (11) aufweist, die sich parallel zu der oberen Erstreckungsebene (P_{U}) erstreckt und eine obere Spanfläche (12) sich zwischen den oberen Schneidkanten (7) und der oberen Basisfläche (11) erstreckt.

3. Schneideinsatz nach Anspruch 2, wobei die obere Seite (2) weiterhin zumindest eine obere Verstärkungsphase (13) aufweist, welche die oberen Schneidkanten (7) mit der oberen Spanfläche (12) verbindet.

4. Schneideinsatz nach einem der Ansprüche 1 bis 3, wobei der zumindest eine Nebenschneidkantenabschnitt (9, 10) in Form einer eine Oberfläche glättenden Nebenschneidkante vorliegt.

5. Schneideinsatz nach Anspruch 4, wobei jede obere Schneidkante (7) eine erste und eine zweite oberflächenglättende Nebenschneidkante (9, 10) aufweist, die in einer Draufsicht unter einem Winkel relativ zueinander ausgebildet sind.

6. Indexierbarer Schneideinsatz (1) für ein Fräswerkzeug (101), wobei der Schneideinsatz aufweist:
eine obere Seite (2), welche eine obere Erstreckungsebene (P_{U}) definiert,
eine untere Seite (3), welche eine untere Erstreckungsebene (P_{L}) parallel zu der oberen Erstreckungsebene (P_{U}) definiert,
wobei eine zentrale Achse (C2) sich senkrecht durch die obere Erstreckungsebene (P_{U}) und die untere Erstreckungsebene (P_{L}) erstreckt,
eine Seitenfläche (4), welche die obere Seite (2) und die untere Seite (3) verbindet, wobei die Seitenfläche (4) eine Mehrzahl von oberen Hauptfreiflächen (5) und Nebenfreiflächen (6, 6a, 6b) aufweist, und
zumindest sechs identische und abwechselnd verwendbare obere Schneidkanten (7), die sich um die obere Seite (2) erstrecken, wobei jede Schneidkante (7) einen spanabhebenden Hauptschneidkantenabschnitt (8) und zumindest einen Nebenschneidkantenabschnitt (9, 10) aufweist, wobei der Hauptschneidkantenabschnitt (8) an einem Übergang zwischen der oberen Seite (2) und einer der oberen Hauptfreiflächen (5) gebildet wird und der Nebenschneidkantenabschnitt (9, 10) an einem Übergang zwischen der oberen Seite (2) und einer der Nebenfreiflächen (6, 6a, 6b) in einem Bereich zwischen zwei Hauptschneidkantenabschnitten (8) gebildet wird,
wobei jede der oberen Hauptfreiflächen (5) in einer Seitenansicht gesehen, unter einem stumpfen eingeschlossenen Winkel (α) bezüglich der oberen Erstreckungsebene (Pu) ausgebildet ist, wobei der eingeschlossene Winkel (α) zwischen der oberen Erstreckungsebene (P_{U}) und jeder der Hauptfreiflächen (5) in dem Bereich von 98° ≤ α ≤ 114° liegt, **dadurch gekennzeichnet, dass** der mindestens eine Nebenschneidkantenabschnitt (9, 10) die Form einer oberflächenabstreifenden Nebenkante aufweist und wobei jede obere Schneidkante (7) eine erste und eine zweite oberflächenabstreifende Nebenkante (9, 10) umfasst, die in der Draufsicht betrachtet in einem Winkel zueinander ausgebildet sind.

7. Schneideinsatz nach Anspruch 6, wobei jede der Nebenfreiflächen (6, 6a, 6b) in einer Seitenansicht gesehen mit einem eingeschlossenen Winkel β zu der oberen Erstreckungsebene (P_{U}) ausgebildet ist, wobei β < α.

8. Schneideinsatz nach Anspruch 7, wobei der eingeschlossene Winkel β zwischen der oberen Erstreckungsebene (P_{U}) und der Nebenfreifläche (6, 6a, 6b) unter zumindest einem Teil der oberen Nebenschneidkante (9, 10) in dem Bereich 85° ≤ β ≤ 100° liegt.

9. Schneideinsatz nach einem der vorstehenden Ansprüche, wobei der Schneideinsatz (1) zumindest sieben identische und abwechselnd verwendbare obere Schneidkanten (7) aufweist.

10. Schneideinsatz nach einem der vorstehenden Ansprüche, wobei der Schneideinsatz (1) doppelseitig mit der unteren Seite (3) ist, welche mit der oberen Seite (2) identisch ist.

11. Schneideinsatz nach einem der vorstehenden Ansprüche, wobei die Seitenfläche (4) eine Mehrzahl von zurückspringenden Stützflächen (14) aufweist.

12. Schneideinsatz nach einem der vorstehenden Ansprüche, wobei der Hauptschneidkantenabschnitt (8) geradlinig oder im Wesentlichen geradlinig ist.

13. Schneideinsatz nach einem der vorstehenden Ansprüche, wobei der Nebenschneidkantenabschnitt (9) in Form eines gekrümmten Kantenabschnitts vorliegt, welcher zwischen zwei angrenzenden Hauptschneidkantenabschnitten (8) vorliegt und zumindest einen Krümmungsradius hat.

14. Planfräswerkzeug (101), welches für eine spanabhebende Bearbeitung ausgelegt ist und einen Werkzeugkörper (102) einschließlich eines vorderen Endes (104) und eines hinteren Endes (105) aufweist, zwischen welchen sich eine zentrale Rotationsachse (C1) erstreckt, um welche das Werkzeug (101) in einer Rotationsrichtung (R) drehbar ist, und wobei zumindest ein Einsatzsitz (107) an einem Übergang zwischen dem vorderen Ende (104) und einer Hüllfläche (106) ausgebildet ist, die sich zwischen dem vorderen Ende (104) und dem hinteren Ende (105) des Werkzeugkörpers (102) erstreckt, wobei der zumindest eine Einsatzsitz (107) eine untere Stützfläche aufweist, wobei eine Spantasche (110) in Rotationsrichtung des Werkzeuges vor dem zumindest einen Einsatzsitz (107) ausgebildet ist, **dadurch gekennzeichnet, dass**
das Werkzeug (101) zumindest einen Schneideinsatz (1) nach einem der Ansprüche 1 bis 12 aufweist, der gesichert und lösbar in dem zumindest einen Einsatzsitz (107) montiert ist.

15. Planfräswerkzeug (101) nach Anspruch 14, wobei das Werkzeug so ausgestaltet ist, dass ein Hauptschneidkantenabschnitt (8) unter einem Anstellwinkel κ, welcher kleiner als 80° ist, verläuft, und so, dass die obere Erstreckungsebene (P_{U}) des Schneideinsatzes einerseits radial verkippt um einen radialen Kippwinkel γ_{f} in dem Bereich von -60° ≤ γ_{f} ≤ -25° und andererseits axial verkippt unter einem axialen Kippwinkel γₘ innerhalb des Bereiches von -20° ≤ γₘ ≤ 0° angeordnet ist.

## Revendications

1. Plaquette de coupe indexable (1) pour un outil de fraisage (101), la plaquette de coupe comprenant :
un côté supérieur (2) définissant un plan d'extension supérieur (PU) ;
un côté inférieur (3) définissant un plan d'extension inférieur (PL) parallèle au plan d'extension supérieur (PU) ;
dans laquelle un axe central (C2) s'étend perpendiculairement à travers le plan d'extension supérieur (PU) et le plan d'extension inférieur (PL) ;
une surface latérale (4) reliant le côté supérieur (2) et le côté inférieur (3), la surface latérale (4) comprenant une pluralité de surfaces de dépouille principales supérieures (5) et de surfaces de dépouille secondaires (6, 6a, 6b) ; et
au moins six arêtes de coupe supérieures (7) identiques et utilisables en alternance s'étendant autour du côté supérieur (2), dans laquelle chaque arête de coupe (7) comprend une partie d'arête de coupe principale d'enlèvement de copeaux (8) et au moins une partie d'arête de coupe secondaire (9, 10), dans laquelle la partie d'arête de coupe principale (8) est formée dans une transition entre le côté supérieur (2) et l'une desdites surfaces de dépouille principales supérieures (5), et la partie d'arête de coupe secondaire (9, 10) est formée dans une transition entre le côté supérieur (2) et l'une desdites surfaces de dépouille secondaires (6, 6a, 6b) dans une région entre deux parties d'arête de coupe principales (8), chacune desdites surfaces de dépouille principales supérieures (5) est formée à un angle intérieur obtus α par rapport au plan d'extension supérieur (PU) tel que vu en vue en élévation latérale, et l'angle intérieur (α) entre le plan d'extension supérieur (PU) et chacune desdites surfaces de dépouille principales supérieures (5) est dans la plage 98° ≤ α ≤ 114°, **caractérisée en ce que** la plaquette de coupe (1) est double face avec le côté inférieur (3) identique au côté supérieur (2), **en ce que** chacune desdites surfaces de dépouille secondaires (6, 6a, 6b) est formée à un angle intérieur β par rapport au plan d'extension supérieur (PU) tel que vu en vue en élévation latérale, dans laquelle β < α et **en ce que** l'angle intérieur β entre le plan d'extension supérieur (PU) et la surface de dépouille secondaire (6, 6a, 6b) en dessous d'au moins une partie de l'arête de coupe secondaire supérieure (9, 10) est dans la plage 85° ≤ β ≤ 100°.

2. Plaquette de coupe selon la revendication 1, dans laquelle le côté supérieur (2) comprend une surface de base supérieure (11) en retrait s'étendant parallèlement au plan d'extension supérieur (PU), et une surface de copeaux supérieure (12) s'étendant entre les arêtes de coupe supérieures (7) et la surface de base supérieure (11).

3. Plaquette de coupe selon la revendication 2, dans laquelle le côté supérieur (2) comprend en outre au moins une crête de renfort supérieure (13) reliant les arêtes de coupe supérieures (7) à la surface de copeaux supérieure (12).

4. Plaquette de coupe selon l'une quelconque des revendications 1 à 3, dans laquelle l'au moins une partie d'arête de coupe secondaire (9, 10) est sous la forme d'une arête secondaire de balayage de surface.

5. Plaquette de coupe selon la revendication 4, dans laquelle chaque arête de coupe supérieure (7) comprend une première et une deuxième arêtes secondaires de balayage de surface (9, 10) formées à un angle l'une par rapport à l'autre telles que vues en vue en plan.

6. Plaquette de coupe indexable (1) pour un outil de fraisage (101), la plaquette de coupe comprenant :
un côté supérieur (2) définissant un plan d'extension supérieur (PU) ;
un côté inférieur (3) définissant un plan d'extension inférieur (PL) parallèle au plan d'extension supérieur (PU) ;
dans laquelle un axe central (C2) s'étend perpendiculairement à travers le plan d'extension supérieur (PU) et le plan d'extension inférieur (PL) ;
une surface latérale (4) reliant le côté supérieur (2) et le côté inférieur (3), la surface latérale (4) comprenant une pluralité de surfaces de dépouille principales supérieures (5) et de surfaces de dépouille secondaires (6, 6a, 6b) ; et
au moins six arêtes de coupe supérieures (7) identiques et utilisables en alternance s'étendant autour du côté supérieur (2), dans laquelle chaque arête de coupe (7) comprend une partie d'arête de coupe principale d'enlèvement de copeaux (8) et au moins une partie d'arête de coupe secondaire (9, 10), dans laquelle la partie d'arête de coupe principale (8) est formée dans une transition entre le côté supérieur (2) et l'une desdites surfaces de dépouille principales supérieures (5), et la partie d'arête de coupe secondaire (9, 10) est formée dans une transition entre le côté supérieur (2) et l'une desdites surfaces de dépouille secondaires (6, 6a, 6b) dans une région entre deux parties d'arête de coupe principales (8), chacune desdites surfaces de dépouille principales supérieures (5) est formée à un angle intérieur obtus α par rapport au plan d'extension supérieur (PU) tel que vu en vue en élévation latérale, dans laquelle l'angle intérieur (α) entre le plan d'extension supérieur (PU) et chacune desdites surfaces de dépouille principales supérieures (5) est dans la plage 98° ≤ α ≤ 114, **caractérisée en ce que** l'au moins une partie d'arête de coupe secondaire (9, 10) est sous la forme d'une arête secondaire de balayage de surface et dans laquelle chaque arête de coupe supérieure (7) comprend une première et une deuxième arête secondaire de balayage de surface (9, 10) formées à un angle l'une par rapport à l'autre telles que vues en vue en plan.

7. Plaquette de coupe selon la revendication 6, dans laquelle chacune desdites surfaces de dépouille secondaires (6, 6a, 6b) est formée à un angle intérieur β par rapport au plan d'extension supérieur (PU) tel que vu en vue en élévation latérale, dans laquelle β < α.

8. Plaquette de coupe selon la revendication 7, dans laquelle l'angle intérieur β entre le plan d'extension supérieur (PU) et la surface de dépouille secondaire (6, 6a, 6b) en dessous d'au moins une partie de l'arête de coupe secondaire supérieure (9, 10) est dans la plage 85° ≤ β ≤ 100°.

9. Plaquette de coupe selon l'une quelconque des revendications précédentes, dans laquelle la plaquette de coupe (1) comprend au moins sept arêtes de coupe supérieures (7) identiques et utilisables en alternance.

10. Plaquette de coupe selon l'une quelconque des revendications précédentes, dans laquelle la plaquette de coupe (1) est double face avec le côté inférieur (3) identique au côté supérieur (2).

11. Plaquette de coupe selon l'une quelconque des revendications précédentes, dans laquelle la surface latérale (4) comprend une pluralité de surfaces de support (14) en retrait.

12. Plaquette de coupe selon l'une quelconque des revendications précédentes, dans laquelle la partie d'arête de coupe principale (8) est rectiligne ou essentiellement rectiligne.

13. Plaquette de coupe selon l'une quelconque des revendications précédentes, dans laquelle la partie d'arête de coupe secondaire (9) se présente sous la forme d'une partie d'arête incurvée s'étendant entre deux parties d'arête de coupe principales (8) adjacentes et présentant au moins un rayon de courbure.

14. Outil de fraisage de face (101) configuré pour un usinage par enlèvement de copeaux comprenant un corps d'outil (102) comportant une extrémité avant (104) et une extrémité arrière (105), entre lesquelles s'étend un axe de rotation central (C1) autour duquel l'outil (101) est rotatif dans un sens de rotation (R), et au moins un siège de plaquette (107) étant formé dans une transition entre l'extrémité avant (104) et une surface d'enveloppe (106) s'étendant entre l'extrémité avant (104) et l'extrémité arrière (105) du corps d'outil (102), l'au moins un siège de plaquette (107) comprenant une surface de support inférieure, dans lequel une poche à copeaux (110) est prévue devant l'au moins un siège de plaquette (107) dans le sens de rotation de l'outil ;
**caractérisé en ce**
**que** l'outil (101) comprend au moins une plaquette de coupe (1) selon l'une quelconque des revendications 1 à 13 montée de manière fixe et détachable dans l'au moins un siège de plaquette (107).

15. Outil de fraisage de face (101) selon la revendication 14, dans lequel l'outil est configuré de sorte qu'une partie d'arête de coupe principale (8) soit à un angle d'entrée K inférieur à 80°, et de sorte que le plan d'extension supérieur (PU) de la plaquette de coupe soit, d'une part, incliné radialement à un angle d'inclinaison radiale γf dans la plage -60° ≤ γf ≤ -25° et, d'autre part, incliné axialement à un angle d'inclinaison axiale γm dans la plage -20° ≤ γm ≤ 0°.
